# EUROPÄISCHE PATENTSCHRIFT

(11) **EP 4 112 400 B1**
(45) Veröffentlichungstag und Bekanntmachung des Hinweises auf die Patenterteilung: **06.08.2025**
(21) Anmeldenummer: 22181794.3
(22) Anmeldetag: 29.06.2022
(51) Int. Cl.: B60T 17/00, B60T 17/04, B60T 17/22

(54) **BAUELEMENT FÜR EINE LUFTLEITUNG EINER SCHIENENFAHRZEUGBREMSANLAGE**
COMPONENT FOR AN AIR LINE OF A RAIL VEHICLE BRAKE SYSTEM
ÉLÉMENT DE CONSTRUCTION POUR UNE CONDUITE D'AIR D'UN SYSTÈME DE FREINAGE DE VÉHICULE SUR RAIL

(30) Priorität: 30.06.2021 DE 202021103482 U
(43) Veröffentlichungstag der Anmeldung: 04.01.2023
(73) Patentinhaber: Windhoff Bahn- und Anlagentechnik GmbH, 48431 Rheine (DE)
(72) Erfinder: BEERMANN, Christian, 48282 Emsdetten (DE); MOHAUPT, Michael, 49811 Lingen (DE)
(74) Vertreter: Patentanwälte Olbricht Buchhold Keulertz

(56) Entgegenhaltungen:
- US-A- 6 042 197
- US-A- 6 126 724
- US-A1- 2015 251 645

## Beschreibung

In der Bahntechnik ist es aus der Praxis bekannt, dass die Bremsanlage eines Schienenfahrzeugs eine Hauptluftleitung, kurz HLL, sowie eine Hauptluftbehälterleitung, kurz HBL, aufweist. Bei der Verlegung der Hauptluftleitung HLL ist es regelmäßig erforderlich, zum Anschluss einer weiteren Leitung bzw. eines Leitungszweigs einen Abzweig oder eine Gabelung im Leitungsverlauf zu schaffen. Um die Übertragung des Bremssignals sicherzustellen, ist allerdings normativ festgelegt, dass die Hauptluftleitung HLL nicht im 90°-Winkel verlaufen darf. Daher werden an den entsprechenden Stellen Y-Stücke in die Hauptluftleitung HLL eingesetzt.

Die Y-Stücke sind nicht als Zukaufteile wirtschaftlich erhältlich, sondern erfordern eine vergleichsweise komplizierte Fertigung, wobei das Y-Stück aus zwei oder mehr Abschnitten vergleichsweise einfacherer Geometrie mittels Schweißverbindungen gefügt wird. Die Schweißnähte erfordern einen erheblichen Nachbearbeitungs-Aufwand für Reinigungs- und Glättungsarbeiten, insbesondere auf der Innenseite des Y-Stücks.

Weiterhin sind aus der Praxis sowohl Tropfbecher für die Hauptluftleitung HLL bekannt, die zum Abscheiden von Flüssigkeit aus der in den Luftleitungen geführten Luft dienen, also zum Sammeln von Kondensat, und weiterhin sind aus der Praxis Luftfilter für die Hauptluftbehälterleitung HBL bekannt, die neben dem Abscheiden von Flüssigkeit zum Abscheiden von partikelartigen Verunreinigungen aus der in den Luftleitungen geführten Luft dienen.

Aus der US 6 042 197 A, die den am nächsten kommenden Stand der Technik darstellt, ist ein Bauelement bekannt, das zur Anordnung in einer Luftleitung einer pneumatischen Bremsanlage eines Schienenfahrzeugs bestimmt ist und als Lufttrocknungsanlage ausgestaltet ist, die dazu dient, Öl und Wasser aus der Luft der Bremsanlage abzuscheiden. Zusätzlich zu den Einlass- und Auslass-Anschlüssen, mit denen die Lufttrocknungsanlage an die Luftleitung angeschlossen werden kann, weist die Lufttrocknungsanlage einen weiteren Auslass auf, über den Wasser, das aus der Luft abgeschieden worden ist, aus der Lufttrocknungsanlage herausgeführt werden kann.

Auch aus der US 6 126 724 A ist ein Bauelement bekannt, das zur Anordnung in einer Luftleitung einer pneumatischen Bremsanlage eines Schienenfahrzeugs bestimmt ist und ebenfalls dazu dient, Wasser - hier in Form von Wasserdampf - und verschiedene Bestandteile aus der Druckluft eines Schienenfahrzeugs abzuscheiden, und zwar mittels einer permeablen Membran in Kombination mit einem Filtermedium.

Aus der US 2015 / 0 251 645 A1 sind eine Reinigungs-Steuerung sowie ein entsprechendes Reinigungs-Steuergerät für Lufttrockner bekannt. Ein Trocknungsmittel, welches sich mit Feuchtigkeit angereichert hat, wird durch einen Reinigungszyklus regeneriert, der darin besteht, Luft unter Druck in umgekehrter Richtung durch das Trocknungsmittel zu leiten. Die Steuerung umfasst einen Steuerausgang zur Übermittlung eines Steuersignals zur Steuerung des Lufttrockners. Die Steuerung ist in der Lage, auf der Basis eines Regenerations-Volumenwerts einen verstärkten Reinigungszyklus für den Lufttrockner in Gang zu setzen. Der Wert des Regenerationsvolumens basiert auf der akkumulierten Luftmenge, die dem Lufttrockner entweder zum ersten Mal zugeführt worden ist oder seit einem vorhergegangenen Standardreinigungszyklus.

Der Erfindung liegt die Aufgabe zugrunde, ein Installationselement zu schaffen, welches die Installation von Hauptluftleitungen sowie Hauptluftbehälterleitungen bei Schienenfahrzeugen vereinfacht und preisgünstiger ermöglicht.

Die Erfindung schlägt mit anderen Worten vor, ein multifunktionales Installationselement zu verwenden, welches in Kombination oder einzeln die Funktion eines Tropfbechers, eines Luftfilters, eines Abzweigs oder einer Gabelung im Luftleitungssystem eines Schienenfahrzeugs ermöglicht. Durch achsgleich gegenüberliegende Anschlüsse können zudem die als Luftleitung verwendeten Rohrleitungen ohne Versatz verlegt werden, was die Installation des Luftleitungssystems weiter vereinfacht. Die Zeitersparnis wirkt sich wirtschaftlich vorteilhaft aus, und da das vorschlagsgemäße Bauelement unterschiedliche einzelne Bauelemente wie z.B. einen Tropfbecher, einen Luftfilter, einen Abzweig oder ein Gabelungsstück durch einen einzigen Typ von Bauelement ersetzt, wird sowohl bei der Installation des Luftleitungssystems als auch hinsichtlich der Lagerhaltung von Ersatzteilen eine auch in wirtschaftlicher Hinsicht vorteilhafte Vereinfachung erreicht.

Die Erfindung geht dabei von folgender Überlegung aus: Typischerweise ist praktisch jedes Schienenfahrzeugs dazu ausgelegt, mit einem weiteren Schienenfahrzeug gekoppelt zu werden. In vielen Fällen erfolgt dabei die Versorgung für die Bremsanlage des Schienenfahrzeugs durch das andere, angekoppelte Schienenfahrzeug. Aus diesem Grund sind an den Kuppelstellen der Hauptluftleitungen HLL Tropfbecher sowie der Hauptluftbehälterleitungen HBL Luftfilter vorgesehen, um den ggf. möglichen Eintrag von Wasser oder von Verunreinigungen vom angekuppelten Fahrzeug in die Bremsanlage des Schienenfahrzeugs zu verhindern. Beispielsweise kann in der Hauptluftleitung HLL ein Tropfbecher angeordnet werden, weil in der HLL keine querschnittsverengenden Bauteile wie z. B. Filter zulässig sind. In der Hauptluftbehälterleitung HBL hingegen kann ein Luftfilter angeordnet werden, so dass in der Bremsanlage des Schienenfahrzeugs nicht nur ein Wassereintrag, sondern auch der Eintrag von Verunreinigungen vermieden werden kann.

Luftfilter, wie sie bei den Schienenfahrzeugen eingesetzt werden, sind als handelsübliche Zukaufteile wirtschaftlich erhältlich. Die Ein- und Auslass-Anschlüsse liegen nicht auf einer gemeinsamen Achse. Für den Anschluss der Leitungsabschnitt bedeutet dies, dass die entsprechenden Rohrleitungen versetzt geführt werden müssen. Die üblichen Tropfbecher hingegen weisen Ein- und Auslass-Anschlüsse auf, die auf einer gemeinsamen Achse gegenüberliegend an dem Becherkörper vorgesehen sind, so dass die entsprechenden Rohrleitungen ohne Versatz geführt werden.

Vorschlagsgemäß werden die Funktionen des Luftfilters, des Tropfbechers und auch des Y-Stücks in einem multifunktionalen Installationselement der Bremsanlage zusammengeführt. Dieses multifunktionale Bauelement weist einerseits einen Becherkörper auf, der als Sammler für das Kondensat genutzt werden kann, und weiterhin weist es in seinem Inneren einen Raum zur Aufnahme eines Luftfiltereinsatzes auf, so dass dieses multifunktionale Bauelement wahlweise auch als Luftfilter genutzt werden kann. Eine Anschluss-Baugruppe des multifunktionalen Bauelements weist mehrere Anschlüsse auf, von denen sich zwei Anschlüsse achsgleich gegenüberliegen, so dass sie als Ein- und Auslass-Anschlüsse für eine durchgehende Leitung genutzt werden können, deren Abschnitte nicht versetzt zueinander verlaufen müssen und die deshalb besonders einfach montiert werden kann. Abzweige, die in einem von 90° abweichenden Winkel, beispielsweise in einem Winkel von 45°, an diese durchgehende Achse anschließen, ermöglichen die Verwendung der Anschluss-Baugruppe als Abzweigung oder Gabelung, ersetzen also das bislang übliche Y-Stück.

In einer Ausgestaltung kann die Anschluss-Baugruppe mehrere Abzweige aufweisen, beispielsweise nach rechts und nach links, so dass sie universell montierbare ist und nicht eigens ausgestaltete rechte und linke Abzweige hergestellt und bereitgestellt werden müssen.

Die Anschluss-Baugruppe kann als separater Gehäusekopf ausgestaltet sein, der beispielsweise als Guss-Bauteil oder Fräs-Bauteil hergestellt ist. Auf diese Weise kann preisgünstig und mit vergleichsweise geringem Nachbearbeitung-Aufwand eine Anschluss-Baugruppe als Bauteil mit komplexer Geometrie bereitgestellt werden. Dieses beispielsweise als Gehäusekopf bezeichnete Bauteil weist die verschiedenen Leitungsabschnitte und auch die verschiedenen Ein- und Auslass-Anschlüsse auf oder zumindest eine Anschlussgeometrie aufweist, um mithilfe entsprechender Beschlagelemente (Einschraubverschraubungen) die jeweiligen Ein- und Auslässe an diesem Guss- oder Fräs-Bauteil zu schaffen, an welche Rohrleitungen des Luft Leitungssystems angeschlossen werden können.

In einer Ausgestaltung kann in den Raum, der für die Abtropffunktion vorgesehen ist, und der beispielsweise in dem erwähnten Gehäusekopf untergebracht ist, so ausgestaltet sein, dass er die Aufnahme eines Filtereinsatzes ermöglicht, um auf diese Weise das Installationselement als Luftfilter ausgestalten zu können. In diesem Fall schließt an den Raum, der für die Abtropffunktion vorgesehen ist, ein Verschlusselement an, welches wahlweise geöffnet oder geschlossen werden kann, um bei geöffnetem Verschlusselement einen Zugang zu dem Raum zu ermöglichen, um z.B. den Luftfiltereinsatz montieren, demontieren oder zu Wartungszweck entnehmen zu können. Beispielsweise kann das Installationselement ausschließlich als Luftfilter genutzt werden, so dass der Raum, der ansonsten für die Abtropffunktion vorgesehen ist und nun einen Luftfiltereinsatz enthält, dort mit einer Verschlussplatte abgeschlossen sein kann, wo sich ansonsten ein Becher an den Raum anschließt und zur Aufnahme des Kondensats dient. Alternativ kann das Installationselement aber auch sowohl als Luftfilter wie auch als Kondensatsammler genutzt werden, so dass der Raum, der einen Luftfiltereinsatz enthält, auch für die Abtropffunktion genutzt wird und oberhalb des erwähnten Bechers angeordnet ist, so dass das Kondensat schwerkraftbedingt in den Becher läuft und dort gesammelt wird.

Das erfindungsgemäße, multifunktionale Installationselement bietet an einigen Stellen, an denen es eingesetzt werden kann, zusätzliche Funktionen. Wenn beispielsweise lediglich ein Leitungsabzweig geschaffen werden soll, bietet das vorschlagsgemäße Bauelement die Möglichkeit, als Abzweig genutzt zu werden, sowie gleichzeitig an dieser Stelle auch die Funktion eines Tropfbechers und ggf. sogar auch eines Luftfilters. Diese zusätzlichen Funktionen bereitzustellen, verbessert jedoch nicht nur die Bremsanlage des Schienenfahrzeugs im Hinblick darauf, dass Feuchtigkeit und Verschmutzungen in einem besonders hohen Maße zurückgehalten werden, was sich durch einen verringerten Reparaturaufwand wirtschaftlich vorteilhaft auswirken kann und welches auch zu einer längeren Lebens- oder Nutzungsdauer der Bremsanlage führen und sich dadurch ebenfalls wirtschaftlich vorteilhaft auswirken kann. Vielmehr bietet durch die Verwendung von Gleichteilen das vorschlagsgemäße Bauelement auch ohne einen derartigen Zusatznutzen bereits einen wirtschaftlichen Vorteil, da der Herstellungsaufwand einzelner Komponenten verringert werden kann und auch der betriebsinterne Logistikaufwand beim Betreiber des Schienenfahrzeugs verringert werden kann, beispielsweise durch eine Vereinfachung bei der Verwaltung und Lagerung von Ersatzteilen, da deren Anzahl vorschlagsgemäß reduziert werden kann.

Die Beschlagelemente (Einschraubverschraubungen) sind an dem Einlass-Anschluss und an den Auslass-Anschlüssen identisch ausgestaltet, um auch in dieser Hinsicht wirtschaftlich vorteilhaft ein Gleichteileprinzip zu nutzen. Wenn die Anschlüsse mithilfe von Beschlagelementen (Einschraubverschraubungen) geschaffen werden, sind dementsprechend auch dort, wo in dem multifunktionalen Installationselement die Anschlüsse vorgesehen sind, diejenigen Bereiche, die zur Montage der Beschlagelemente (Einschraubverschraubungen) dienen, identisch ausgestaltet.

Außerdem bietet diese identische Ausgestaltung der Anschlüsse zusätzliche Möglichkeiten für die Installation des Bauteils: Rein beispielhaft ist bislang beschrieben worden, dass lediglich einer der Anschlüsse als Einlass-Anschluss dazu dient, Luft in das Installationselement zu führen, während wenigstens einer oder mehrere Auslass-Anschlüsse dazu dienen, Luft aus diesem Bauteil herauszuführen. Abweichend davon kann allerdings vorgesehen sein, Luft an zwei Anschlüssen in das Bauteil zu führen, beispielsweise am mittleren von drei Auslass-Anschlüssen sowie an einem der beiden anderen, seitlichen Auslass-Anschlüsse, und die Luft durch den Einlass-Anschluss wieder aus dem Installationselement herauszuführen. Die Bezeichnung als Einlass oder als Auslass ist daher rein beispielhaft gewählt und hängt letztlich davon ab, wie das Installationselement in den Verlauf der verschiedenen Luftleitungen einer Bremsanlage eines Schienenfahrzeugs eingebunden wird.

Ein Ausführungsbeispiel der Erfindung wird anhand der rein schematischen Darstellungen nachfolgend näher erläutert. Dabei zeigt
- Fig. 1: eine perspektivische Ansicht auf ein multifunktionales Installationselement der Bremsanlage eines Schienenfahrzeugs, wobei das Bauelement bereichsweise transparent dargestellt ist,
- Fig. 2: eine Draufsicht auf das Bauelement von Fig. 1, und
- Fig. 3: eine Seitenansicht auf das Bauelement von Fig. 1, mit einem zugehörigen, separat dargestellten Luftfiltereinsatz.

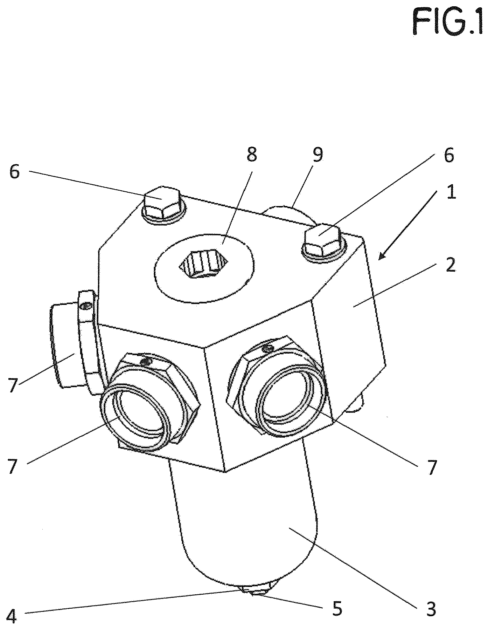

In Fig. 1 ist ein Bauteil 1 dargestellt, welches als multifunktionales Installationselement der Bremsanlage eines Schienenfahrzeugs ausgestaltet ist. Es weist einen transparent dargestellten Gehäusekopf 2 auf, von dem aus sich ein Kondensatsammler 3 nach unten erstreckt, der zur Aufnahme von Flüssigkeit dient, die aus der Luft der Bremsanlage abgeschieden wird. Am unteren Ende ist der Kondensatsammler 3 mit einer Schlüsselfläche 4 versehen, die als Sechskant ausgestaltet ist und zur Montage oder Demontage dient, um den Kondensatsammler 3 mit dem Gehäusekopf 2 verschrauben oder vom Gehäusekopf 2 abschrauben zu können. Abweichend von dem dargestellten Ausführungsbeispiel kann der Kondensatsammler auch als angeflanschtes Bauteil am Gehäusekopf ausgeführt sein. Durch die Schlüsselfläche 4 erstreckt sich eine Ablassschraube 5, durch welche der Kondensatsammler 3 wahlweise geöffnet oder geschlossen und dementsprechend bei Bedarf die im Kondensatsammler 3 gesammelte Flüssigkeit abgelassen werden kann.

Mittels zweier Halteschrauben 6 kann der Gehäusekopf 2 und somit insgesamt das Bauteil 1 an einer entsprechenden Halterung montiert werden. In Fig. 1 sind im Gehäusekopf 2 insgesamt drei Anschlüsse erkennbar, die als Auslass-Anschlüsse 7 bezeichnet sind. Während der Gehäusekopf 2 als Guss- oder als Fräs-Bauteil hergestellt worden ist, sind die Auslass-Anschlüsse 7 des Gehäusekopfes 2 als separate Beschlagelemente in Form von Einschraubverschraubungen ausgestaltet, die in dem Guss-Bauteil montiert sind und aus dem Guss- oder Fräs-Bauteil herausragen. Weiterhin ist im Gehäusekopf 2 ein von oben zugängliches Verschlusselement 8 in Form einer Verschlussschraube angeordnet.

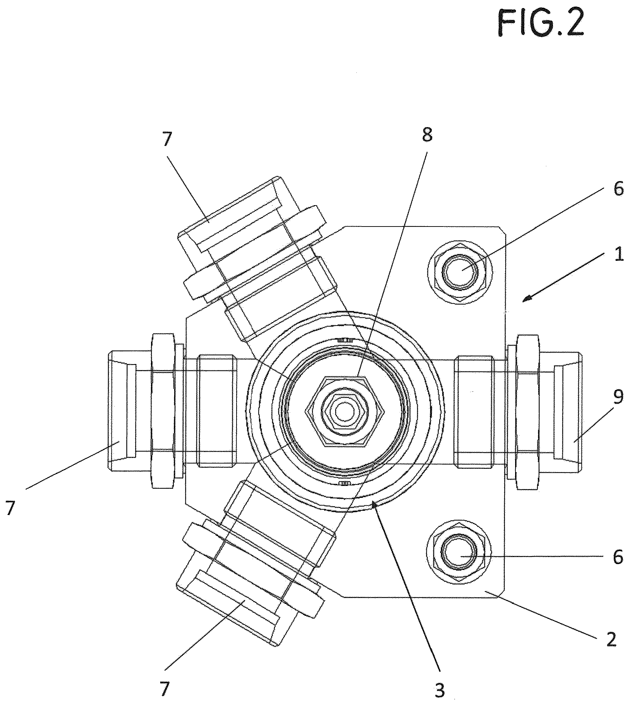

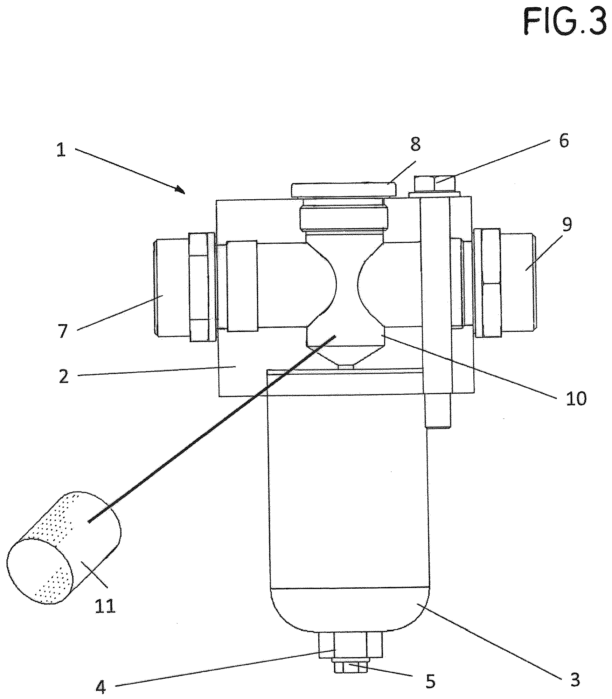

Fig. 2 zeigt das multifunktionale Installationselement 1 von oben. Da der Gehäusekopf 2 transparent dargestellt ist, ist andeutungsweise auch der Kondensatsammler 3 erkennbar. Insbesondere ist erkennbar, dass dem mittleren der Auslass-Anschlüsse 7 in geradliniger Verlängerung ein Einlass-Anschluss 9 gegenüberliegt, der zudem, wie insbesondere aus Fig. 3 ersichtlich ist, auch auf gleicher Höhe angeordnet ist, so dass diese beiden Ein- und Auslass-Anschlüsse 7 und 9 einander achsgleich gegenüber liegen.

Fig. 2 zeigt weiterhin, dass die beiden seitlichen Auslass-Anschlüsse 7 in einem Winkel von 45° an den durchgehenden Leitungsabschnitt anschließen, der im Gehäusekopf 2 zwischen dem Einlass-Anschluss 9 und dem mittleren Auslass-Anschluss 7 verläuft. Wenn zunächst eine Rohrleitung an den Einlass-Anschluss 9 angeschlossen wird, kann diese Leitung entweder in einem 135°-Winkel nach rechts oder links weitergeführt werden, oder sie kann geradlinig und ohne Versatz weitergeführt werden, wenn dabei jeweils nur eine einzige Rohrleitung an einen der drei Auslass-Anschlüsse 7 angeschlossen wird. Zudem ermöglicht das Bauelement 1, dass die Rohrleitung in Art einer Gabelung verzweigt werden kann, indem dementsprechend zwei Rohrleitungen an zwei der drei Auslass-Anschlüsse 7 angeschlossen werden. Ggf. kann sogar eine Doppelverzweigung dadurch erzielt werden, dass an jeden der drei Auslass-Anschlüsse 7 jeweils eine Rohrleitung angeschlossen wird.

Aus Fig. 3 ist mittels der transparenten Darstellung des Gehäusekopfes 2 ersichtlich, dass der Kondensatsammler 3 in den Gehäusekopf 2 hineinragt und in ihm aufgenommen ist. Weiterhin ist oberhalb des Kondensatsammlers 3 im Gehäusekopf 2 ein Raum 10 ersichtlich, der die Abtropf-Funktion ermöglicht und dementsprechend als Feuchtigkeits-Abscheider ausgestaltet ist. Nach Öffnung des Verschlusselements 8 ist dieser Raum 10 zugänglich, so dass ein in Fig. 3 separat dargestellter Luftfiltereinsatz 11 in dem Raum 10 angeordnet oder aus diesem Raum 10 entnommen werden kann. Auf diese Weise kann das Bauelement 1 wahlweise als Kondensatsammler oder als Luftfilter genutzt werden. Die Abtropf-Funktion steht bauartbedingt grundsätzlich zur Verfügung.

Ergänzend dazu, oder auch unabhängig davon, die Luft von Feuchtigkeit oder Verschmutzungen zu befreien, kann das Bauelement 1 als Abzweig oder Gabelung für die Leitungsverlauf einer Hauptluftleitung oder einer Hauptluftbehälterleitung genutzt werden. Hierzu kann der Kondensatsammler 3 durch eine Blindplatte ersetzt werden, so dass der Gehäusekopf 2 als reines Abzweigelement dient.

Die Beschlagelemente an dem Einlass-Anschluss 9 und an den Auslass-Anschlüssen 7 sind als Einschraubverschraubungen und identisch ausgestaltet, und dementsprechend sind auch im Gehäusekopf 2 die Bereiche, die zur Montage dieser Anschlüsse 7 und 9 dienen, identisch ausgestaltet. Rein beispielhaft ist bei dem dargestellten Ausführungsbeispiel vorgesehen, dass lediglich einer der Anschlüsse als Einlass-Anschluss 9 dazu dient, Luft in das Bauteil 1 zu führen, während wenigstens einer oder mehrere Auslass-Anschlüsse 7 dazu dienen, Luft aus dem Bauteil 1 herauszuführen. Abweichend davon kann vorgesehen sein, Luft an zwei Anschlüssen in das Bauteil 1 zu führen beispielsweise am mittleren Auslass-Anschluss 7 und an einem der beiden anderen Auslass-Anschlüsse 7, und die Luft durch den Einlass-Anschluss 9 wieder aus dem Bauteil 1 herauszuführen. Die Bezeichnung als Einlass oder als Auslass für die in den Zeichnungen mit 7 und neuen gekennzeichneten Anschlüsse ist daher rein beispielhaft.

### Bezugszeichen:

- 1: Bauelement
- 2: Gehäusekopf
- 3: Kondensatsammler
- 4: Schlüsselfläche
- 5: Ablassschraube
- 6: Halteschraube
- 7: Auslass-Anschluss
- 8: Verschlusselement
- 9: Einlass-Anschluss
- 10: Raum
- 11: Luftfiltereinsatz

## Patentansprüche

1. Bauelement (1), das dazu bestimmt ist, in eine Luftleitung einer Bremsanlage eines Schienenfahrzeugs eingebunden zu werden,
mit einem Kondensatsammler (3),
einem Einlass-Anschluss (9), der dazu bestimmt ist, an die Luftleitung angeschlossen zu werden,
und einem Auslass-Anschluss (7), der dazu bestimmt ist, an die Luftleitung angeschlossen zu werden,
wobei sich der Einlass-Anschluss (9) und der Auslass-Anschluss (7) achsgleich gegenüberliegen,
wobei das Bauelement (1) einen Raum (10) aufweist, der zur Aufnahme eines Luftfiltereinsatzes (11) bestimmt ist, **dadurch gekennzeichnet,**
**dass** das Bauelement (1) wenigstens einen weiteren Auslass-Anschluss (7) aufweist, der ebenfalls dazu bestimmt ist, an die Luftleitung angeschlossen zu werden,
und der in einem von 90° abweichenden Winkel zu der Achse ausgerichtet ist, auf welcher der Einlass-Anschluss (9) und der Auslass-Anschluss (7) liegen,
derart, dass ein multifunktionales Bauelement geschaffen ist, welches in Kombination oder einzeln die Funktion eines Tropfbechers, eines Luftfilters, eines Abzweigs oder einer Gabelung im Luftleitungssystem eines Schienenfahrzeugs ermöglicht.

2. Bauelement (1) nach Anspruch 1,
**dadurch gekennzeichnet,**
**dass** das Bauelement (1) zwei weitere Auslass-Anschlüsse (7) aufweist, die in unterschiedlichen Richtungen zu der Achse ausgerichtet sind, auf welcher der Einlass-Anschluss (9) und der Auslass-Anschluss (7) liegen.

3. Bauelement (1) nach Anspruch 1 oder 2,
**dadurch gekennzeichnet,**
**dass** das Bauelement (1) einen Gehäusekopf (2) aufweist, der den Einlass-Anschluss (9) und die Auslass-Anschlüsse (7) aufweist sowie den Raum (10).

## Claims

1. Structural element (1) which is intended to be incorporated into an air line of a brake system of a rail vehicle,
having a condensate collector (3),
an inlet connection (9) which is intended to be connected to the air line,
and an outlet connection (7) which is intended to be connected to the air line,
wherein the inlet connection (9) and the outlet connection (7) are situated coaxially opposite one another,
wherein the structural element (1) has a space (10) which is intended for receiving an air-filter insert (11), **characterized**
**in that** the structural element (1) has at least one further outlet connection (7), which is likewise intended to be connected to the air line
and is oriented at an angle different from 90° in relation to the axis on which the inlet connection (9) and the outlet connection (7) lie,
in such a way that a multifunctional structural element which, in combination or individually, makes possible the function of a drip cup, an air filter, a branch or a junction in the air-line system of a rail vehicle is provided.

2. Structural element (1) according to Claim 1, **characterized**
**in that** the structural element (1) has two further outlet connections (7) which are oriented in different directions in relation to the axis on which the inlet connection (9) and the outlet connection (7) lie.

3. Structural element (1) according to Claim 1 or 2, **characterized**
**in that** the structural element (1) has a housing head (2) which has the inlet connection (9) and the outlet connections (7) and also the space (10).

## Revendications

1. Composant (1) qui se destine à être intégré dans une conduite d'air d'une installation de freinage d'un véhicule ferroviaire,
avec un collecteur (3) de condensat,
un raccord d'entrée (9), qui se destine à être raccordé à la conduite d'air,
et un raccord de sortie (7), qui se destine à être raccordé à la conduite d'air,
le raccord d'entrée (9) et le raccord de sortie (7) se faisant face sur le même axe,
le composant (1) comportant un espace (10) qui se destine à recevoir un insert (11) de filtre à air,
**caractérisé en ce**
**que** le composant (1) comporte au moins un autre raccord de sortie (7), qui se destine également à être raccordé à la conduite d'air,
et qui est orienté selon un angle différent de 90° par rapport à l'axe, sur lequel le raccord d'entrée (9) et le raccord de sortie (7) se situent,
de telle manière qu'est créé un composant multifonctionnel, lequel permet en combinaison ou individuellement la fonction d'une poche de vidange, d'un filtre à air, d'un embranchement ou d'une bifurcation dans le système de conduite d'air d'un véhicule ferroviaire.

2. Composant (1) selon la revendication 1, **caractérisé en ce**
**que** le composant (1) comporte deux autres raccords de sortie (7) qui sont orientés dans différentes directions par rapport à l'axe, sur lequel se trouvent le raccord d'entrée (9) et le raccord de sortie (7).

3. Composant (1) selon la revendication 1 ou 2, **caractérisé en ce**
**que** le composant (1) comporte une tête (2) de boîtier, qui comporte le raccord d'entrée (9) et les raccords de sortie (7) ainsi que l'espace (10).
